# EUROPEAN PATENT SPECIFICATION

(11) **EP 1 388 972 B1**
(45) Date of publication and mention of the grant of the patent: **01.03.2006**
(21) Application number: 03254675.6
(22) Date of filing: 25.07.2003
(51) Int. Cl.: H04L 12/18, H04L 12/24

(54) **Multi-layer multicast user management method**
Mehrschichtiges Verfahren zum Verwalten von Multicast Teilnehmern
Procédé multicouche de gestion d'abonnés multidiffusion

(30) Priority: 07.08.2002 CN 02125984
(43) Date of publication of application: 11.02.2004
(73) Proprietor: Huawei Technologies Co., Ltd., Guangdong, Shenzhen 518057 (CN)
(72) Inventor: Heng, Zhi, Huawei Service Center Building, Shenzhen, 518057 Guangdong (CN)
(74) Representative: Mounteney, Simon James

(56) References cited:
- EP-A- 1 111 892
- EP-A- 1 185 130
- US-A- 5 963 556
- US-B1- 6 185 698
- RAMI LEHTONEN, JARMO HARJU: "Access network independent service control system for stream based service" PROCEEDING OF THE EUNICE 2000, [Online] September 2000 (2000-09), pages 1-8, XP002258177 Enschede, Netherlands Retrieved from the Internet: <URL:http://citeseer.nj.nec.com/cache/pape rs/cs/21998/http:zSzzSzwwwtgs.cs.utwente.n lzSzeunicezSzsummerschoolzSzpaperszSzpaper 2-1.pdf/access-network-independent-service .pdf> [retrieved on 2003-10-16]
- RAMI LEHTONEN, JARMO HARJU: "Distributed Service PLatform for Managing Stream Services" SPRINGER VERLAG, BERLIN, HEIDELBERG, [Online] 2001, pages 660-673, XP002258178 Retrieved from the Internet: <URL:http://www.springerlink.com/openurl.a sp?genre=article&issn=0302-9743&volume=217 0&spage=660> [retrieved on 2003-10-16]

## Description

### Field of the Technology

The present invention relates to a user management method for multicasting proxy in data communications, specifically to a user management method for multicasting proxy.

### Background of the Invention

In prior art, multicasting can only be controlled at an interface level, but not at data link level or at a particular user level. In this way, members of a multicasting group are interfaces or sub-interfaces, so a multicasting packet sender can only forward multicasting packets to interfaces without knowing anything about who will receive the multicasting packets. It is not under control whether a particular user belonging to a multicasting group has the right to send multicasting packets. Apart from that, a particular user who has received some multicasting packets can't be precisely charged. Therefore, user level management can't be achieved at present, and it is inconvenient in practice.

In "Distributed service platform for managing stream service" by RAMI LEHTONEN and JARMO HARJU (XP 002258178), a distributed service platform has been proposed in order to enable all service accessible from every access network. The distributed architecture based on the platform comprises four network elements: a WWW Server for providing interface towards the users accessing the stream services, an Access Server which consists of several functional entities, such as an Access Manager, a Customer Manager, a Device Manager and so on, a Media Server for storing media data and providing corresponding management for the media data, and a Media Client for processing streaming audio and video. With this distributed service platform, a device from any access network could be used to order and control stream services and the processing of the stream can be handled on some other devices like PC.

In the Access Server, the Access Manager is responsible for user and device authentication and granting the access rights; the Customer Manager is used to take care of the user roles and profiles and it is also responsible for user authentication; the Device Manager is used to handle the roles and registrations of the user devices. Though a flexible management can be realized through the cooperation of the Access Manager, the Customer Manager and the Device Manager, this management is used to manage stream services and cannot be applied for management for multicasting characteristics.

In addition, in the European patent publication No. 1,111,892, methods and system for internet protocol network surveillance are proposed. The method mainly consists of three steps: (a) receiving a first message indicating that an end user device is under surveillance; (b) in response to receiving the first message, extracting media stream identification information from a call signaling message associated with the end user device; and (c) transmitting the media stream identification information to an edge router associated with the end user device to enable copying of a media stream identified by the media stream identification information. It could be seen the methods and systems are used to perform surveillance for internet protocol network, and it fails to point out how to perform management for multicasting characteristics.

### Summary of the Invention

It is an object of the invention to provide a user management method for multicasting proxy. With this method, multicasting groups can be controlled more effectively and user level management can be achieved.

To achieve this object, a method according to the present invention comprises:
a. dividing a user management for multicasting groups into a first management for controlling multicasting characteristics corresponding to interfaces, a second management for controlling multicasting characteristics corresponding to data links and a third management for controlling multicasting characteristics corresponding to particular users, the controlling of each of the first, second and third management is done by control blocks with corresponding multicasting characteristic data;
b. establishing a data relationship among the three kinds of control blocks so that a certain control block corresponding to a data link can be found from all control blocks corresponding to an interface and a certain control block corresponding to a user can be found from all control blocks corresponding to a data link; and
c. when it is needed to manage users joining or leaving a multicasting group, finding a certain control block corresponding to interface according to data structure of a network interface control block having received a multicasting packet; then judging multicasting characteristics of the multicasting group which are defined in the found control block corresponding to interface to determine whether to continue the successive processing; if so, performing the next steps, otherwise ending the processing;
d. finding a certain control block corresponding to a data link according to the data relationship between control blocks corresponding to a data link and said control block corresponding to an interface; then judging multicasting characteristics corresponding to data links of the multicasting packet to determine whether to continue the successive processing; if so, performing the next step, otherwise ending the processing; and
e. finding a certain control block corresponding to user according to a multicasting group IP address and user attributes; then adding, deleting or modifying corresponding user information in the control block corresponding to a user..

It can be seen that the present invention can control multicasting groups at the interface level, at the data link level and at particular a user level, other than only at interface level in prior art, so relative to the prior art, the present invention can manage multicasting groups more effectively and flexibly. In addition, the control blocks corresponding to a data link and the control blocks corresponding to a user are new added in the invention, and the data relationship among three kinds of control blocks is established, so the invention can manage every particular user of multicasting groups. In this way, the management for multicasting groups in the invention is more profound and practicable than that in the prior art.

Preferred features of the invention are set out in Claims 2 to 7.

### Brief Description of the Drawings

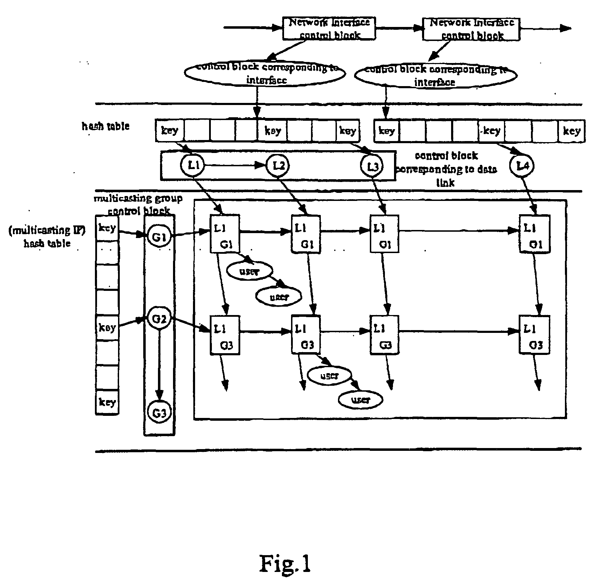

Figure1 shows a three-dimensional linking-list control diagram for implementing user management for multicasting proxy according to the present invention.

### Detailed Description of the Invention

The invention will be described in more detail hereinafter, with reference to the accompanying drawing and embodiments.

To achieve the object of multi-level user management for multicasting proxy, the invention comprises the following main steps:
(1) dividing the user management for multicasting groups into a first management for interface, a second management for data link levels and a third management for user levels, and respectively setting one or more than one control blocks corresponding to an interface, one or more than one control block corresponding to a data link and one or more than one control block corresponding to a user, wherein a control block is indeed a data structure that respectively comprises the multicasting characteristics of multicasting groups corresponding to an interface, a data link or a user in fact;
(2) establishing a data relationship among the above-mentioned control blocks, that is, a certain control block corresponding to data link can be found from all control blocks corresponding to interface and a certain control block corresponding to user can be found from all control blocks corresponding to data link; and
(3) performing user management for users, such as authentication, authorization and charge etc., with the data relationship among three kinds of control blocks.

Among the three kinds of control blocks according to the present invention, the control block corresponding to an interface is the interface/sub-interface control block according to the prior art. The control blocks corresponding to an interface are used to manage multicasting characteristics of every interface and sub-interface in a system. This management includes: whether to allow multicasting application, whether to allow multicasting applications at a user side or a network side, whether to allow tying multicasting resources or multicasting groups, limiting the number of members of a multicasting group or the number of multicasting groups etc..

The control blocks corresponding to a data link are used to manage multicasting characteristics corresponding to the data link of a network. A data link here is a Virtual Local Area Network ID (VLAN ID) in an IPOEOVLAN or a Permanent Virtual Connection (PVC) in an IPOEOA etc., The management for multicasting characteristics corresponding to the data link includes, for example, limiting the number of members of a multicasting group when applying a core edge network device such as an Edge Service Router (ESR), or forwarding only one datagram for all members of the same multicasting group at the same data link to save the resources of network bandwidth etc..

The control blocks corresponding to a user are used to manage multicasting characteristics at user level, which includes two main aspects: managing user's joining or leaving a multicasting group and managing of charging a particular user and forwarding multicasting packets, which will be described in more detail later.

The second step of the present invention, that is, how to establish the data relationship among three kinds of control blocks, is a key point of the invention. A three-dimensional linking-list can be used to establish the above-mentioned data relationship, and other linking-list structures or a database structure etc. can be used instead. Figure1 shows the structure of a three-dimensional linking-list. The three dimensions are data link (including interface), multicasting group and user IP address. In detail, since all control blocks are linked with linking-lists or arrays, every control block corresponding to a user can be searched through any of the data link (including interface), the multicasting group and the user ID. The index relationship ensures three-level management can be achieved with the data structure, that is, multicasting characteristics can be respectively managed at interface, data link and particular user. In this way, the management for multicasting groups can be flexible and effective.

Reference to Fig.1, a network interface control block is used to record interface information. The control blocks corresponding to an interface according to the invention, i.e. the interface multicasting control blocks as shown in Fig.1, are linked to the network interface control block. In other words, an index mode for multicasting groups is added in the network interface control block with a pointer. In this way, control blocks corresponding to an interface can be effectively managed by means of the management module for interfaces in the operating system of a network device. Also as shown in Fig.1, the control blocks L1, L2, L3 and L4 at data link and control blocks G1,G2 and G3 at user are respectively the control blocks corresponding to a data link for data links 1, 2, 3 and 4 and the control blocks corresponding to a user for multicasting groups 1, 3 and 4. The control blocks corresponding to a data link and control blocks corresponding to a user are respectively used to establish the index relationship between data link and users and between multicasting group IP addresses and users. By means of the two index relationships, a particular user can be searched and fixed on by either the data link or multicasting group IP address. The hash table of data link and the hash table of multicasting group IP address can be used to increase searching efficiency. In detail, corresponding key of the hash table can be quickly calculated with particular hash arithmetic for data link index or multicasting group IP address. Next, a particular control block corresponding to a data link or control block corresponding to a user can be found through hash table index with keys.

After the data relationship among three kinds of control blocks has been established, the accurate control at user level can be achieved. For example, for multicasting group members in the same data link where the sender is located, only one multicasting packet is sent to the members; and for general multicasting group members, with cluster technique a data link device can attend the management of multicasting and devices for forwarding multicasting packets can be controlled. During forwarding a multicasting packet, the devices for forwarding multicasting packets will record the data flow, so multicasting application of a particular user can be recorded and the user can be charged.

As for the management for user's joining or leaving a multicasting group, it includes searching the control blocks corresponding to an interface, the control blocks corresponding to a data link and the control blocks corresponding to a user sequentially after receiving a multicasting report packet. A specific processing is as follows.

First, according to the network interface control block that has received the multicasting report packets, a certain interface multicasting control block, i.e. a certain control block corresponding to an interface, will be found and characteristics of the multicasting group will be judged to determine whether the successive processing will be continued; if so, process the next steps, otherwise not process the next steps.

According to the linked-lists under the control blocks corresponding to an interface and the data link characteristics of the received packets, a certain control block corresponding to a data link will be found and the data link characteristics of the multicasting group will be determined. If the multicasting application can be applied at this data link, process the next step; otherwise not process the next step. If no control block corresponding to a data link can be found, then a new control block corresponding to a data link can be added at that data link.

According to the multicasting group IP address and user attributes (such as user identification), a certain control block corresponding to a user will be found, then the management of user's joining or leaving the multicasting group will be made, that is, corresponding user information can be added, deleted or modified in the control block corresponding to a user.

Although the present invention has been described with reference to specific exemplary embodiments, it will be evident that various modification and changes can be made to these embodiments. Accordingly, the specification and drawings are to be regarded in an illustrative sense rather than in a restrictive sense.

## Claims

1. A multi-level user management method for multicasting proxy, comprising:
a. dividing a user management for multicasting groups into a first management for controlling multicasting characteristics corresponding to interfaces, a second management for controlling multicasting characteristics corresponding to data links and a third management for controlling multicasting characteristics corresponding to particular users; the controlling of each of the first, second and third management is done by control blocks with corresponding multicasting characteristic data;
b. establishing a data relationship among the three kinds of control block so that a certain control block corresponding to a data link can be found from all control blocks corresponding to an interface and a certain control block corresponding to a user can be found from all control blocks corresponding to a data link;
c. when it is needed to manage users joining or leaving a multicasting group, finding a certain control block corresponding to an interface according to data structure of a network interface control block having received a multicasting packet; then judging multicasting characteristics of the multicasting group which are defined in the found control block corresponding to an interface to determine whether to continue the successive processing; if so, performing the next steps, otherwise ending the processing;
d. finding a certain control block corresponding to a data link according to the data relationship between control blocks corresponding to a data link and said control block corresponding to an interface; then judging multicasting characteristics corresponding to data links of the multicasting packet to determine whether to continue the successive processing; if so, performing the next step, otherwise ending the processing; and
e. finding a certain control block corresponding to a user according to a multicasting group IP address and user attributes; then adding, deleting or modifying corresponding user information in the control block corresponding to user.

2. The method of Claim 1, which is **characterized in that** said controlling multicasting characteristics corresponding to interfaces includes: judging whether to allow multicasting applications at an interface, judging whether to allow multicasting applications at a user side or a network side, judging whether to allow tying multicasting resources or multicasting groups, limiting the number of members of a multicasting group or limiting the number of multicasting groups.

3. The method of Claim 1, which is **characterized in that** said controlling multicasting characteristics corresponding to data links is limiting the number of members of a multicasting group when employing a core edge network device such as an edge service router.

4. The method of Claim 1, which is **characterized in that** said controlling multicasting characteristics corresponding to data links is forwarding only one multicasting packet for all members of the same multicasting group at the same data link when forwarding data.

5. The method of Claim 1, which is **characterized in that** the data relationship is established through a linking-list structure or a relational database structure.

6. The method of Claim 1, which is **characterized in that** the method further comprises:
if no control block corresponding to a data link is found when finding a certain control block corresponding to a data link, adding a new control block corresponding to a data link at the data link; and
establishing the data relationship among control blocks corresponding to an interface, control blocks corresponding to a user and the new control block corresponding to a data link.

7. The method of Claim 1, which is **characterized in that** the method further comprises:
recording the flow of multicasting packets having been forwarded with a device forwarding program and charging the user who has received said multicasting packets.

## Revendications

1. Procédé multi-niveau de gestion d'utilisateur pour un proxy de multi-diffusion comprenant:
a) la division d'une gestion d'utilisateur pour des groupes de multi-diffusion en une première gestion afin de commander des caractéristiques de multi-diffusion correspondant aux interfaces, et une seconde gestion pour commander des caractéristiques de multi-diffusion correspondant aux liaisons de données et une troisième gestion pour commander des caractéristiques de multi-diffusion correspondant aux utilisateurs particuliers; la commande de chacune des première, seconde et troisième gestions est faite par des blocs de commande avec des données de caractéristique multi-diffusion correspondantes;
b) l'établissement d'une relation de données parmi les trois types de bloc de commande de sorte qu'un certain bloc de commande correspondant aux liaisons de données peut être trouvé à partir de tous les blocs de commande correspondant à une interface et un certain bloc de commande correspondant à un utilisateur peut être trouvé à partir de tous les blocs de commande correspondant à une liaison de données;
c) lorsqu'il est nécessaire de gérer des utilisateurs rejoignant ou quittant un groupe de multi-diffusion, la découverte d'un certain bloc de commande correspondant à une interface selon une structure de données du bloc de commande d'interface de réseau ayant reçu un paquet de multi-diffusion; puis l'évaluation des caractéristiques de multi-diffusion du groupe de multi-diffusion qui sont définies dans le bloc de commande trouvé correspondant à une interface pour déterminer s'il faut continuer le traitement successif; et si oui, la réalisation des étapes suivantes, sinon la fin du traitement;
d) la découverte d'un certain bloc de commande correspondant à une liaison de données selon la relation de données entre des blocs de commande correspondant à une liaison de données et ledit bloc de commande correspondant à une interface; puis l'évaluation des caractéristiques de multi-diffusion correspondant à des liaisons de données du paquet de multi-diffusion pour déterminer s'il faut continuer le traitement successif; si oui, la réalisation de l'étape suivante, sinon la fin du traitement; et
e) la découverte d'un certain bloc de commande correspondant à un utilisateur selon une adresse IP de groupes multi-diffusion et des attributs d'utilisateur; puis l'addition, l'effacement ou la modification des informations d'utilisateur correspondantes dans le bloc de commande correspondant à l'utilisateur.

2. Procédé selon la revendication 1, qui est **caractérisé en ce que** lesdites caractéristiques de multi-diffusion de commande correspondant aux interfaces comprennent: l'évaluation de la possibilité de permettre des applications de multi-diffusion sur une interface, de permettre des applications de multi-diffusion du côté d'un utilisateur ou du côté du réseau, de permettre la liaison des ressources de multi-diffusion ou des groupes de multi-diffusion, la limitation du nombre de membres d'un groupe de multi-diffusion ou la limitation du nombre de groupes multi-diffusion.

3. Procédé selon la revendication 1, qui est **caractérisé en ce que** ladite commande des caractéristiques de multi-diffusion correspondant aux liaisons de données limite le nombre de membres d'un groupe de multi-diffusion lors de l'emploi un dispositif de réseau de bord de noyau tel qu'un routeur de service de bord.

4. Procédé selon la revendication 1, qui est **caractérisé en ce que** ladite commande des caractéristiques de multi-diffusion correspondant aux liaisons de données est acheminée seulement un paquet multi-diffusion pour tous les membres du même groupe de multi-diffusion sur la même liaison de données lors de l'acheminement des données.

5. Procédé selon la revendication 1, qui est **caractérisé en ce que** la relation de données est établie à travers une structure de liste de liaison ou une structure de base de données relationnelles.

6. Procédé selon la revendication 1, qui est **caractérisé en ce que** le procédé comprend en outre:
si aucun bloc de commande correspondant à une liaison de données n'est trouvé lors de la découverte d'un certain de bloc de commande correspondant à une liaison de données, l'ajout d'un nouveau bloc de commande correspondant à une liaison de données sur la liaison de données; et
l'établissement de la relation de données entre des blocs de commande correspondant à une interface, des blocs de commande correspondant à un utilisateur et un nouveau bloc de commande correspondant à une liaison de données.

7. Procédé selon la revendication 1, qui est **caractérisé en ce que** le procédé comprend en outre:
l'enregistrement d'un flux de paquets de multi-diffusion ayant été acheminé avec un programme d'acheminement de dispositif et de facturation de l'utilisateur qui a reçu lesdits paquets de multi-diffusion.

## Patentansprüche

1. Mehrschichtiges Benutzerverwaltungsverfahren für Multicasting-Proxys, umfassend:
a. Aufteilen einer Benutzerverwaltung für Multicasting-Gruppen in eine erste Verwaltung zum Steuern von Multicasting-Charakteristiken, die Schnittstellen entsprechen, eine zweite Verwaltung zum Steuern von Multicasting-Charakteristiken, die Datenverbindungen entsprechen, und eine dritte Verwaltung zum Steuern von Multicasting-Charakteristiken, die bestimmten Benutzern entsprechen; wobei das Steuern von jeder der ersten, zweiten und dritten Verwaltung durch Steuerblöcke mit entsprechenden Multicasting-Charakteristikdaten durchgeführt wird;
b. Einrichten einer Datenbeziehung unter den drei Arten von Steuerblöcken, so dass ein bestimmter Steuerblock, der einer Datenverbindung entspricht, aus allen Steuerblöcken, die einer Schnittstelle entsprechen, gefunden werden kann und ein bestimmter Datenblock, der einem Benutzer entspricht, aus allen Steuerblöcken, die einer Datenverbindung entsprechen, gefunden werden kann;
c. wenn es erforderlich ist, Benutzer zu verwalten, die zu einer Multicasting-Gruppe hinzukommen oder diese verlassen, Auffinden eines bestimmten Steuerblocks, der einer Schnittstelle entspricht, gemäß einer Datenstruktur eines Netzschnittstellen-Steuerblocks, der ein Multicasting-Paket empfangen hat, dann Beurteilen der Multicasting-Charakteristiken der Multicasting-Gruppe, die in dem gefundenen Steuerblock, der einer Schnittstelle entspricht, definiert sind, um zu bestimmen, ob die sukzessive Verarbeitung fortzusetzen ist; wenn dem so ist, Ausführen der nächsten Schritte, ansonsten Beenden der Verarbeitung;
d. Auffinden eines bestimmten Steuerblocks, der einer Datenverbindung entspricht, gemäß einer Datenbeziehung zwischen Steuerblöcken, die einer Datenverbindung entsprechen, und dem Steuerblock, der einer Schnittstelle entspricht; dann Beurteilen von Multicasting-Charakteristiken, die Datenverbindungen des Multicasting-Pakets entsprechen, um zu bestimmen, ob die sukzessive Verarbeitung fortzusetzen ist; wenn dem so ist, Ausführen des nächsten Schritts, ansonsten Beenden der Verarbeitung; und
e. Auffinden eines bestimmten Steuerblocks, der einem Benutzer entspricht, gemäß einer Multicasting-Gruppen-IP-Adresse und Benutzerattributen; dann Hinzufügen, Löschen oder Modifizieren von entsprechenden Benutzerinformationen in dem Steuerblock, der einem Benutzer entspricht.

2. Verfahren nach Anspruch 1, welches **dadurch gekennzeichnet ist, dass** das Steuern der Multicasting-Charakteristiken, die Schnittstellen entsprechen, umfasst: Beurteilen, ob an einer Schnittstelle Multicasting-Anwendungen zu erlauben sind, Beurteilen, ob an einer Benutzerstelle oder einer Netzstelle Multicasting-Anwendungen zu erlauben sind, Beurteilen, ob ein Zusammenbinden von Mutlicasting-Ressourcen oder Multicasting-Gruppen zu erlauben sind, Begrenzen der Anzahl von Mitgliedern einer Multicasting-Gruppe oder Begrenzen der Anzahl von Multicasting-Gruppen.

3. Verfahren nach Anspruch 1, welches **dadurch gekennzeichnet ist, dass** das Steuern der Multicasting-Charakteristiken, die Datenverbindungen entsprechen, die Anzahl von Mitgliedern einer Multicasting-Gruppe begrenzt, wenn eine Kemkanten-Netzeinrichtung, wie ein Kantendienstrouter, verwendet wird.

4. Verfahren nach Anspruch 1, welches **dadurch gekennzeichnet ist, dass** das Steuern der Multicasting-Charakteristiken, die Datenverbindungen entsprechen, nur ein Multicasting-Paket für alle Mitglieder der gleichen Multicasting-Gruppe an der gleichen Datenverbindung weiterleitet, wenn Daten weitergeleitet werden.

5. Verfahren nach Anspruch 1, welches **dadurch gekennzeichnet ist, dass** die Datenbeziehung durch einer Streckenverbindungslisten-Struktur oder eine Struktur einer relationalen Datenbank eingerichtet wird.

6. Verfahren nach Anspruch 1, welches **dadurch gekennzeichnet ist, dass** das Verfahren ferner umfasst:
wenn kein Steuerblock, der einer Datenverbindung entspricht, gefunden wird, wenn ein bestimmter Steuerblock, der einer Datenverbindung entspricht, gefunden wird, Hinzufügen eines neuen Steuerblocks, der einer Datenverbindung entspricht, an der Datenverbindung; und
Einrichten der Datenbeziehung unter Steuerblöcken, die einer Schnittstelle entsprechen, Steuerblöcken, die einem Benutzer entsprechen, und dem neuen Steuerblock, der einer Datenverbindung entspricht.

7. Verfahren nach Anspruch 1, welches **dadurch gekennzeichnet ist**, das das Verfahren umfasst:
Aufzeichnen des Flusses von Mutlicasting-Paketen, die mit einem Einrichtungsweiterleitungsprogramm weitergeleitet worden sind, und Abrechnen mit einem Benutzer, der die Multicasting-Pakete empfangen hat.
